# EUROPEAN PATENT SPECIFICATION

(11) **EP 2 113 885 B1**
(45) Date of publication and mention of the grant of the patent: **02.09.2015**
(21) Application number: 08008331.4
(22) Date of filing: 02.05.2008
(51) Int. Cl.: G06T 11/20

(54) **Method and device for controlling contact information**
Verfahren und Vorrichtung zur Steuerung von Kontaktinformationen
Procédé et dispositif de contrôle des informations de contact

(43) Date of publication of application: 04.11.2009
(73) Proprietor: Vodafone Holding GmbH, 40213 Düsseldorf (DE)
(72) Inventor: Leon, German, 40219 - Düsseldorf (DE); Aramu, Daniela, 40211 - Düsseldorf (DE)
(74) Representative: Jostarndt, Hans-Dieter

(56) References cited:
- US-A- 6 005 578
- US-A1- 2003 167 466
- US-B1- 6 426 761
- R. DACHSELT AND J. EBERT: "Collapsible Cylindrical Trees: A Fast Hierarchical Navigation Technique"" PROCEEDINGS OF THE IEEE SYMPOSIUM ON INFORMATION VISUALIZATION 2001 (INFOVIS'2001), [Online] 22 October 2001 (2001-10-22), - 23 October 2001 (2001-10-23) pages 79-86, XP002495826 Retrieved from the Internet: URL:ieeexplore.ieee.org> [retrieved on 2008-10-11]

## Description

### Technical field

The present invention relates to a method and a device for controlling contact information. In particular the present invention relates to a method according to claim 1 and to a device according to claim 13.

### Background of the invention

Today there is an increasing number of digital communication devices such as personal digital assistance (PDA), portable computers, mobile telephones, palmtop computers, etc.. Sometimes these devices are also equipped with cameras by taking pictures, as well as video and audio recordings. The features and capabilities of the devices lead to an increasing number of data files that maybe exchanged between different devices and users by wireless or wired networks. As an example, a mobile telephone is no longer limited for receiving and making voice calls but it may take photographs, receive e-mails and SMS messages and voice messages. The variety of different kinds of communication increases the number of communication items significantly. This number of communication items is increased even more because one and the same communication item of the above mentioned types is frequently copied to a plurality of recipients. Because of the sheer quantity it becomes consequently more and more difficult for individuals to organize their communication items on a communication device especially if the communication device has only a small screen.

It is known to set up different kinds of directories in which the communication items are listed in a sequential order according to different sorting criteria such as the name of the sender, receiving time, sent time, subject, and the like. However, conventional sorting mechanisms still do not solve the issue completely and the presentation of a large number of communication items remains difficult to organize in this way. In general, it is difficult to locate a specific communication item if the user has only incomplete or vague information for identifying the desired communication item. Another challenge in this regard is to organise address books for Asian names in Asian characters not permitting a straight forward alphabetical ordering.

Several attempts have been made to help the user to organize communication items in a more efficient way.

US 5898435 describes an image controlling device and a corresponding method. According to the known device a menu is constructed by arranging a plurality of menu items three dimensionally along a single cylinder. A portion of these menu items is displayed in such a manner that viewing is performed from the centre of the cylinder outwards.

US 6,005,578 discloses a method and an apparatus for visual navigation of information objects. The known method and apparatus generally relate to graphical user interfaces for computers and other interactive systems. More specifically, they relate to organizing visual objects into navigable structures. The navigable structure includes a series of visual objects which are interconnected by links organized into a series of levels. The user may navigate through the navigable structure by means of a navigator. As a specific example for the use of the navigator, an interface to an interactive television system is mentioned.

US 6,426,761 B1 discloses a method and apparatus for generating graphical user interfaces. The main additional aspect of US 6,426,761 B1 which goes beyond the technical teaching of US 6,005,578 is the implementation of fractal geometries for organizing items such as icons, windows, text and any other graphical information.

### Summary of the invention

The present invention proposes a concept for controlling and organizing contacts in a communication device provided with a screen. In particular the communication device is a portable communication device according to claim 12.

According to a first aspect of the invention suggests a method for organizing graphical elements, wherein each graphical element is associated with a contact, wherein a method comprises the following steps;
- generating a graphical element for each contact;
- associating the graphical element to the corresponding data item;
- sorting the graphical elements into different categories; and
- displaying the graphical elements of different categories in different layers wherein the different layers are created as concentric cylinders such that a user perceives the graphical elements as displayed on an inner wall of the concentric cylinders. The graphical elements are positioned as a function of the frequency of contacts such that the most frequently selected graphical elements are in the main viewing direction of the user.

The advantage of this method is that it allows the user to organise his contacts into different categories and facilitate navigation through a large number of contacts.

It has been found to be advantageous if the method further comprises the step of generating the graphical elements as fractal structures. Fractal structures do not change their appearance independent of their size. This property is very useful if the size of the graphical elements has to be adapted as a function of the number of the graphical elements to be displayed.

Consequently, in an embodiment of the present invention the method further comprises the step of adapting the size of the graphical elements as a function of the number of graphical elements to be displayed.

The method may further comprise the step of positioning the graphical elements on a circular layer.

The method comprises the step of creating the different layers as concentric cylinders. As an option the method further comprises the step of creating a plurality of layers on a single cylinder. It may be useful or necessary to arrange the graphical elements on vertically displaced rings on the cylinders. This embodiment has the advantage that the number of displayed graphical elements can be increased significantly.

In an advantageous embodiment of the present invention the method further comprises the step of dynamically rearranging the different layers as a function of current time and/or as a function of different weekdays. For the user of the relevance or importance of different kinds of contacts may change during the day as well as in dependence of what kind of day it is such as weekend or working day. This embodiment enables the user to always have the most relevant contacts easily accessible independent whether he is at work or at leisure.

It has been found to be advantageous if the method further comprises the step of generating the graphical elements as fractal structures. Fractal structures do not change their appearance independent of their size. This property is very useful if the size of the graphical elements has to be adapted as a function of the number of the graphical elements to be displayed.

Consequently, in an embodiment of the present invention the method further comprises the step of adapting the size of the graphical elements as a function of the number of graphical elements to be displayed.

The method may further comprise the step of positioning the graphical elements on a circular layer.

It has been found to be useful to position the graphical elements as a function of the frequency of contacts. In this case the invention can be developed such that the method further comprises the step of positioning the most frequently selected graphical elements in the main viewing direction of the user.

According to one embodiment the method further comprises the step of creating the different layers as concentric cylinders. As an option the method further comprises the step of creating a plurality of layers on a single cylinder. It may be useful or necessary to arrange the graphical elements on vertically displaced rings on the cylinders. This embodiment has the advantage that the number of displayed graphical elements can be increased significantly.

In an advantageous embodiment of the present invention the method further comprises the step of dynamically rearranging the different layers as a function of current time and/or as a function of different weekdays. For the user of the relevance or importance of different kinds of contacts may change during the day as well as in dependence of what kind of day it is such as weekend or working day. This embodiment enables the user to always have the most relevant contacts easily accessible independent whether he is at work or at leisure.

In a useful embodiment the method further comprises the step of providing a scrolling function allowing rotating the cylinders along their rotational axis.

Finally, the method may further comprise the step of providing a switching function allowing changing between different layers.

According to a second aspect, the present invention suggests a device comprising processing means provided for executing the method according to one or several of the preceding claims.

In a specific embodiment the device is a mobile communication device.

### Brief description of the drawings

Figure 1 shows schematically the organization of contacts and icons on a screen of a communication device;
figure 2 is a perspective schematic illustration of a graphical organization of contacts; figure 3 illustrates another aspect of the organization of contacts according to the present invention; and
figure 4 is a perspective view of the organization of several layers of information.

### Detailed description of embodiments of the invention

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

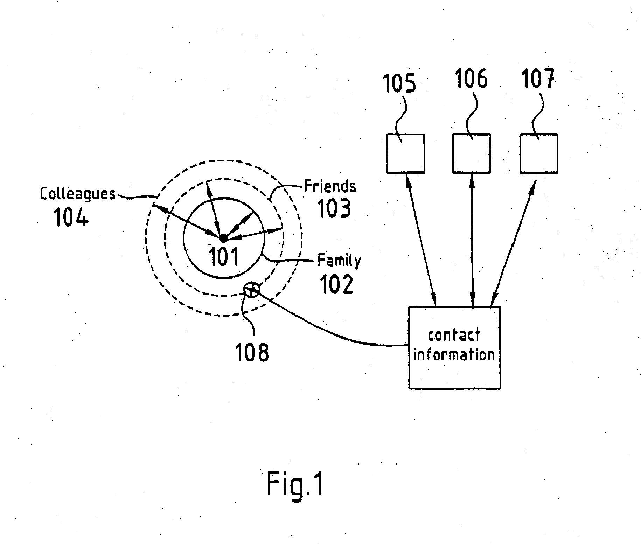

Figure 1 illustrates the organization of contacts and communication items of a communication device which is not shown in its entirety in figure 1 for the sake of simplicity. All contacts and communication items are organized in a concentric arrangement of different kinds of circular layers of contacts. The terms "contact", "contact item" and "contact information" shall have a similar meaning throughout the description of the present invention. The term "communication item" shall have a broad meaning in relation to the present invention. On the one hand it includes e-mail, voice, and SMS messages and the like but also contacts with other people and web sites of service providers. On the other hand also media files like pieces of music, video clips or pictures shall be comprised by the meaning of communication item. However, technically speaking a contact or a communication item is just a data item.

A user is virtually placed in the centre 101 of a first concentric circular layer 102 of contacts representing the family of the user. The family layer 102 is supposed to contain the most important contacts for the user. In the next concentric circular layer towards the outside from the centre there is a layer of friends 103 which is less relevant to the user. Finally, there is concentric layer of 104 of colleagues which is supposed to be the least relevant contact for the user.

The communication device is connected via wireless or wired networks with other communication devices 105, 106, and 107. Whenever a communication takes place the contact information is extracted by the main processing unit of the communication device of the user and placed onto the appropriate layer 102, 103 or 104. As shown in figure 1 a new item 108 is placed on the layer 103 containing the contact information of the friends of the user. The correct assignment may require a user input if the necessary information can not be extracted from other sources.

This is only one example of how the contacts may be organized according to their relevance. Of course many other embodiments of this organization according to the relevance of contacts are possible. In particular, the organization may depend on the time of the day. That means during normal working hours on working days the layer of colleagues may move to the centre of the arrangement shown in figure 1 because the colleague represent at these times the most relevant contacts for the users while friends are moved towards the periphery of the arrangement. In the evening and during weekends the situation reverses and the friends move towards the centre while the colleagues are pushed outwards to the periphery of the relevance of contacts.

The graphical representation of the contact layers 102, 103 and 104 on the screen is controlled by a microprocessor of the communication device. The microprocessor executes program code for this purpose which is known in the art and not part of the present invention. Figure 1 is only a schematic representation and does not reflect how the contact items are displayed on a screen of the communication device.

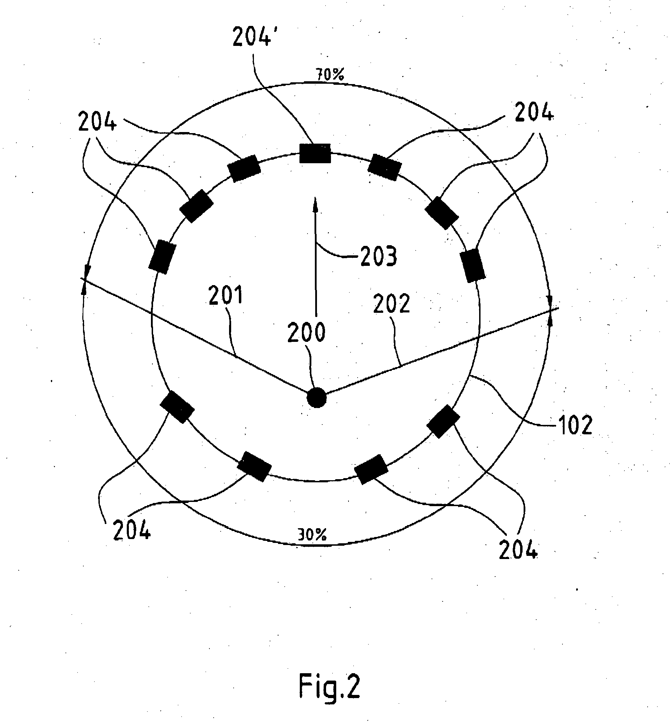

Figure 2 illustrates another aspect of this kind of representation. In figure 2 the stand point of the user is indicated by a dot 200 inside the circular layer 102. The stand point of the user is not in the centre of the layer 102 but displaced in radial direction towards the boundary. Two lines 201 and 202 indicate the limitations of the viewing angle of the user who looks into the direction indicated by arrow 203. Within the limits of the viewing angle the user sees about 70 % of his contacts in front of him. Contact means in this connection not only the number of individuals but rather the number of how many times the user has got in contact with certain number of people. Opposite the viewing direction 203 of the user contacts representing only 30 % of the contact frequency are arranged on the cylinder. The contact icons located in the 30% area are referred to as low frequency contacts. Each contact is represented by an icon 204.

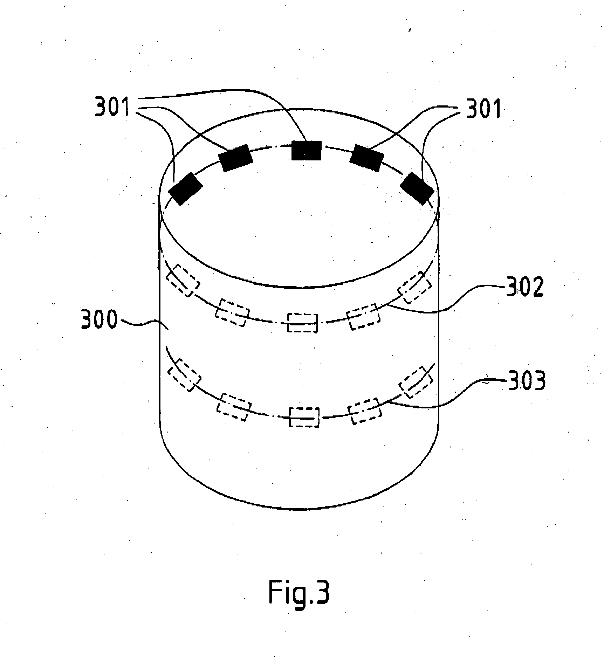

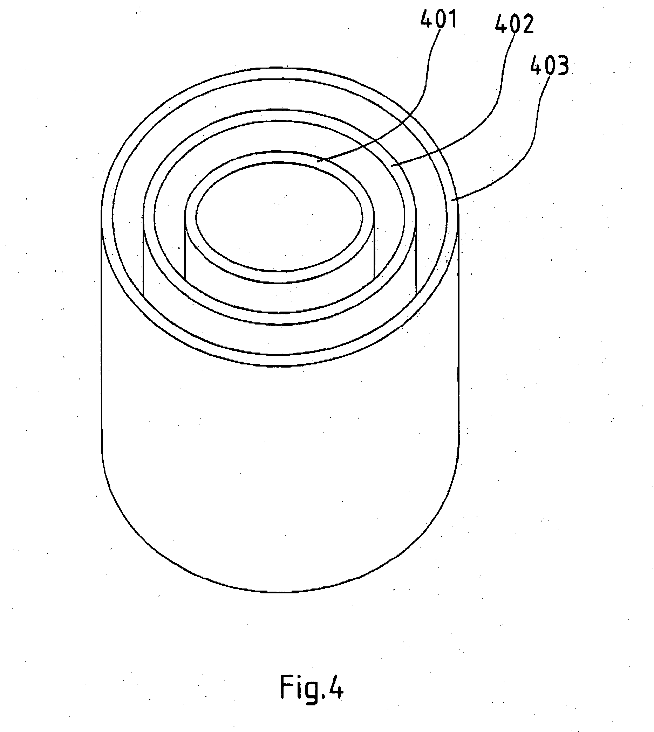

Figure 2 is closer to what the user actually sees on the screen of the communication device. It is a view towards a circular shaped surface as indicated by arrow 203 On the surface the user sees the icons 204. In an embodiment of the invention the circular layers 102, 103, and 104 have a cylindrical shape as will be explained in connection with Figures 3 and 4.

The directory containing the entire contact information may be stored in a memory of the device but preferably the directory is stored on a server of a network provider such that only a link to a specific contact or communication item is stored in the device. This is particularly advantageous for mobile devices having limitations with regard to the size of the available memory as well as their energy consumption because storing a link and downloading a file is less energy consuming than downloading a potentially big file associated with the communication item. In particular during travels it is inconvenient for users if their communication device is running out of energy and becomes inoperative. In the same way it is disturbing for a user if his communication device runs out of memory. Similarly, all calculations which are necessary for a new arrangement of the icons are preferably made on a server of a network provider. However, it is also possible that the local microprocessor of the communication device performs the calculations though this consumes in general more energy than downloading the results of the calculation from the server.

According to an embodiment of the present invention an icon 204 of a low frequency contact moves from the back of the user to the front side so he sees him along the viewing direction 203 if the frequency of contacts with this person increases.

The user has a possibility to link a contact with other information or documents. In this case the linked information is displayed on another layer because it belongs to a different category than the contact. Linked information includes also other contacts. In principle there is no limitation for the number of different layers. However, there are practical limitations determined by individual preferences or requirements.

The shape of contact icons is shown as simple rectangular icons. However, the shape of the icons is not limited to rectangular shapes and the icons may take any other geometrical form. Specifically, the icons may have different appearances if they are associated with different kinds of contacts or contents. This feature facilitates and accelerates the search of the user for a specific item. In addition to different shapes also different colours or textures provide further information to distinguish icons related to different contacts or contents. In a specific embodiment of the invention all icons have a fractal design.

Figure 3 shows perspective representation of icons 301 related to contacts on the inside of a cylinder 300. All icons are arranged along circular lines on the inside of this cylinder. In figure 3 only two lines 302 and 303 are shown. But in other embodiments more circular lines may be stacked one on the other. The representation of the contacts on the screen of the communication device may be switched into a mode in which the user finds him as if he was in the centre of the cylinder 300. He looks outside from the centre of the cylinder and sees all contact icons around him on the inner wall of the cylinder 300.

Three cylinders 401, 402, 403 of the type described in connection with Figure 3 are stacked one into the other as it is shown in figure 4. The different cylinders represent the different categories of contacts of the user similar as it has been described in connection with figure 1. That means moving from the centre of the cylinders towards the cylinders of bigger diameters the relevance of the contacts shown on these cylinders is decreased. The communication device of the user is equipped with scrolling element such as a scroll wheel to allow the user moving between different cylinders in radial direction of the cylinders. The icons on the cylinders are separated also according to different topics. In one embodiment also the size of the icons is scaling with the importance of the icons. The importance of a certain icon may be defined by the number of times the user has selected the icon. The icons on the cylinder are arranged such that the view of the user from his stand point 200 (Figure 2) is optimized towards icons which are laying behind and which are localized on cylinders with a bigger diameter. This feature for example can be used to show the picture of a participant of a meeting close to the stand point of the user in a big size while associated files which are pertinent for the meeting can be seen only in a smaller size behind the picture of the participants. The easiness to discern the icons is supported by the fact that they have fractal design that means their appearance does not change when their size is changed e.g. when the user scrolls towards a specific item.

The embodiments of the invention include the option that one single cylinder contains more than one layer. In this case each layer has the same size with regard to its radius and height.

In an embodiment of the invention the user navigates in the following way through the directory of contacts described so far.

The communication device is provided with a joy stick allowing the user to enter at least left and right as well as up and down commands with the microprocessor controlling the display. A left and right command triggers a rotation of the cylinders 401, 402, and 403 in clockwise and counter clockwise direction, respectively. A mode switch enables the user to rotate the cylinders 401, 402, and 403 selectively or jointly. Up and down commands trigger the change over into a cylinder with a bigger and a smaller diameter, respectively. In this way a user is enabled to navigate very quickly through the entire directory. The selection of a specific item can be made by placing the corresponding icon into a position of direct viewing and than entering a dedicated select command. The direct viewing direction is shown in figure 2 and indicated by arrow 203. In the situation shown in figure 2 the icon 204' would be selected when the select command is executed.

In a preferred embodiment of the invention all pictures icons information files data connections and so on are provided to the communication device via a network connection. They are not stored locally on the device. This is advantageous in view of the energy consumption of the device and also there is practically no limitation with regard to the availability of memory size.

The invention is particularly advantageous for building address books in Asia. It is noted that Asian names do not allow an organization in alphabetical order such as European names. The present invention permits a user to categorize his contacts and thus helping him to find an actually needed contact more easily because most frequently used contacts are better accessible.

## Claims

1. Method for organizing graphical elements (204, 301), wherein each graphical element is associated with a contact, wherein a method comprises the following steps;
- generating a graphical element (204, 301) for each contact;
- associating the graphical element to the corresponding data item;
- sorting the graphical elements into different categories;
- displaying the graphical elements of different categories in different layers (102, 103, 104), wherein the different layers are created as concentric cylinders (401, 402, 403) such that a user perceives the graphical elements as displayed on an inner wall of the concentric cylinders (401, 402, 403);
- positioning the graphical elements (204, 301) as a function of the frequency of contacts such that the most frequently selected graphical elements (204, 301) are in the main viewing direction (203) of the user.

2. Method according to claim 1 wherein the method further comprises the step of generating the graphical elements (204, 301) as fractal structures.

3. Method according to claim 2., wherein the method further comprises the step of adapting the size of the graphical elements (204, 301) as a function of the number of graphical elements to be displayed.

4. Method according to claim 1, wherein the method further comprises the step of positioning the graphical elements (204, 301) on a circular layer (102, 103, 104).

5. Method according to claim 1, wherein the method further comprises the step of creating a plurality of layers on a single cylinder (401, 402, 403).

6. Method according to claim 1, wherein the method further comprises the step of arranging the graphical elements on vertically displayed rings (302, 303) on the cylinders (300; 401, 402, 403).

7. Method according to claim 1, wherein the method further comprises the step of dynamically rearranging the different layers (102, 103, 104) as a function of current time.

8. Method according to claim 7, wherein the method further comprises the step of dynamically rearranging the different layers (102, 103, 104) as a function of different weekdays.

9. Method according to claim 6, wherein the method further comprises the step of providing a scrolling function allowing to rotate the cylinders (300; 401, 402, 403) along their rotational axis.

10. Method according to claim 1, wherein the method further comprises the step of providing a switching function allowing to change between different layers (102, 103, 104).

11. Device comprising processing means provided for executing the method according to one or several of the preceding claims.

12. Device according to claim 11, **characterized in that** the device is a mobile communication device.

## Patentansprüche

1. Verfahren zum Organisieren von Graphikelementen (204, 301), wobei jedes Graphikelement einem Kontakt zugeordnet ist, wobei das Verfahren die folgenden Schritte umfasst:
- Erzeugen eines Graphikelements (204, 301) für jeden Kontakt;
- Zuordnen des Graphikelements zu einem entsprechenden Datenobjekt;
- Sortieren der Graphikelemente in unterschiedliche Kategorien;
- Anzeigen der Graphikelemente unterschiedlicher Kategorien in unterschiedlichen Schichten (102, 103, 104), wobei die unterschiedlichen Schichten als konzentrische Zylinder (401, 402, 403) erzeugt werden, sodass ein Nutzer die Graphikelemente als auf einer Innenwand der konzentrischen Zylinder (401, 402, 403) angezeigt wahrnimmt;
- Positionieren der Graphikelemente (204, 301) in Abhängigkeit von der Häufigkeit der Kontakte, sodass die am häufigsten ausgewählten Graphikelemente (204, 301) in der Hauptblickrichtung (203) des Nutzers sind.

2. Verfahren nach Anspruch 1, wobei das Verfahren ferner den Schritt des Erzeugens der Graphikelemente (204, 301) als fraktale Strukturen umfasst.

3. Verfahren nach Anspruch 2, wobei das Verfahren ferner den Schritt des Anpassens der Größe der Graphikelemente (204, 301) in Abhängigkeit von der Anzahl anzuzeigender Graphikelemente umfasst.

4. Verfahren nach Anspruch 1, wobei das Verfahren ferner den Schritt des Positionierens der Graphikelemente (204, 301) auf einer kreisförmigen Schicht (102, 103, 104) umfasst.

5. Verfahren nach Anspruch 1, wobei das Verfahren ferner den Schritt des Erzeugens mehrerer Schichten auf einem einzelnen Zylinder (401, 402, 403) umfasst.

6. Verfahren nach Anspruch 1, wobei das Verfahren ferner den Schritt des Anordnens der Graphikelemente auf vertikal angezeigten Ringen (302, 303) auf den Zylindern (300; 401, 402, 403) umfasst.

7. Verfahren nach Anspruch 1, wobei das Verfahren ferner den Schritt des dynamischen Umordnens unterschiedlicher Schichten (102, 103, 104) in Abhängigkeit von der aktuellen Zeit umfasst.

8. Verfahren nach Anspruch 7, wobei das Verfahren ferner den Schritt des dynamischen Umordnens unterschiedlicher Schichten (102, 103, 104) in Abhängigkeit von unterschiedlichen Wochentagen umfasst.

9. Verfahren nach Anspruch 6, wobei das Verfahren ferner den Schritt des Bereitstellens einer Scroll-Funktion, die die Zylinder (300; 401, 402, 403) entlang ihrer Drehachse zu drehen ermöglicht, umfasst.

10. Verfahren nach Anspruch 1, wobei das Verfahren ferner den Schritt des Bereitstellens einer Schaltfunktion, die zwischen unterschiedlichen Schichten (102, 103, 104) zu wechseln ermöglicht, umfasst.

11. Vorrichtung, die Verarbeitungsmittel umfasst, die zum Ausführen des Verfahrens nach einem oder mehreren der vorhergehenden Ansprüche bereitgestellt sind.

12. Vorrichtung nach Anspruch 11, **dadurch gekennzeichnet, dass** die Vorrichtung eine Mobilkommunikationsvorrichtung ist.

## Revendications

1. Procédé destiné à l'organisation d'éléments graphiques (204, 301), dans lequel chaque élément graphique est associé à un contact, dans lequel le procédé comprend les étapes suivantes :
- générer un élément graphique (204, 301) pour chaque contact ;
- associer l'élément graphique à l'élément de données correspondant ;
- trier les éléments graphiques en différentes catégories ;
- afficher les éléments graphiques de différentes catégories en différentes couches (102, 103, 104), sachant que les différentes couches sont créées en tant que cylindres concentriques (401, 402, 403) de telle façon qu'un utilisateur perçoit les éléments graphiques tels qu'affichés sur une paroi intérieure des cylindres concentriques (401, 402, 403) ;
- positionner les éléments graphiques (204, 301) en fonction de la fréquence de contacts de telle sorte que les éléments graphiques (204, 301) les plus fréquemment sélectionnés sont dans la direction visuelle principale (203) de l'utilisateur.

2. Procédé selon la revendication 1, dans lequel le procédé comprend en outre l'étape de générer les éléments graphiques (204, 301) en tant que structures fractales.

3. Procédé selon la revendication 2, dans lequel le procédé comprend en outre l'étape d'adapter la taille des éléments graphiques (204, 301) en fonction du nombre d'éléments graphiques à afficher.

4. Procédé selon la revendication 1, dans lequel le procédé comprend en outre l'étape de positionner les éléments graphiques (204, 301) sur une couche circulaire (102, 103, 104).

5. Procédé selon la revendication 1, dans lequel le procédé comprend en outre l'étape de créer une pluralité de couches sur un seul cylindre (401, 402,403).

6. Procédé selon la revendication 1, dans lequel le procédé comprend en outre l'étape d'agencer les éléments graphiques sur des anneaux affichés verticalement (302, 303) sur les cylindres (300 ; 401, 402, 403).

7. Procédé selon la revendication 1, dans lequel le procédé comprend en outre l'étape de réagencer dynamiquement les différentes couches (102, 103, 104) en fonction de l'heure actuelle.

8. Procédé selon la revendication 7, dans lequel le procédé comprend en outre l'étape de réagencer dynamiquement les différentes couches (102, 103, 104) en fonction de différents jours de la semaine.

9. Procédé selon la revendication 6, dans lequel le procédé comprend en outre l'étape de fournir une fonction de déroulement permettant de faire tourner les cylindres (300 ; 401, 402, 403) le long de leur axe de rotation.

10. Procédé selon la revendication 1, dans lequel le procédé comprend en outre l'étape de fournir une fonction de basculement permettant de basculer entre différentes couches (102, 103, 104).

11. Dispositif comprend un moyen de traitement prévu pour exécuter le procédé selon l'une ou plusieurs des revendications précédentes.

12. Dispositif selon la revendication 11, **caractérisé en ce que** le dispositif est un dispositif de communication mobile.
